# EUROPÄISCHE PATENTSCHRIFT

(11) **EP 2 478 342 B1**
(45) Veröffentlichungstag und Bekanntmachung des Hinweises auf die Patenterteilung: **31.12.2014**
(21) Anmeldenummer: 10754471.0
(22) Anmeldetag: 13.09.2010
(51) Int. Cl.: G01H 1/00

(54) **VERFAHREN ZUR ERMITTLUNG VON RISSEN IN TURBINENSCHAUFELN**
Method for detecting cracks in turbine blades
Procédé de détection de fissures dans des aubes de turbine

(30) Priorität: 14.09.2009 EP 09011731
(43) Veröffentlichungstag der Anmeldung: 25.07.2012
(73) Patentinhaber: Siemens Aktiengesellschaft, 80333 München (DE)
(72) Erfinder: JUNG, Michael, 45133 Essen (DE); LINNEMANN, Uwe, 41515 Grevenbroich (DE); RICHTER, Christoph Hermann, 49477 Ibbenbüren (DE); SCHINDLER, Peter, 45481 Mülheim (DE); STECKEL, Lando, 45359 Essen (DE)
(86) Internationale Anmeldenummer: PCT/EP2010/063366
(87) Internationale Veröffentlichungsnummer: WO 2011/029926

(56) Entgegenhaltungen:
- EP-A1- 1 505 374
- DE-A1-102005 017 054
- DE-U1- 20 021 970
- US-A- 4 413 519

## Beschreibung

Die Erfindung betrifft ein Verfahren zur Ermittlung von Rissen in Turbinenschaufeln, wobei Schaufelschwingungen der Turbinenschaufel während eines Betriebes ermittelt werden und ein Riss während des Betriebes ermittelbar ist.

Turbomaschinen, insbesondere Dampfturbinen, werden im Betrieb hohen mechanischen und thermischen Belastungen ausgesetzt. Strömungsmaschinen umfassen im Wesentlichen ein feststehendes Bauteil sowie ein um eine Rotationsachse drehbar gelagertes Bauteil. An diesem drehbar gelagerten Bauteil sind in der Regel Turbinenschaufeln angeordnet, die die thermische Energie des Dampfes in Rotationsenergie umwandeln. Bei den im Betrieb auftretenden hohen thermischen Belastungen und den mechanischen Kräften ist es möglich, dass die Turbinenschaufeln Schaufelschwingungen durchführen. Darüber hinaus ist es möglich, dass Risse in den Turbinenschaufeln entstehen können. Eine Detektion solcher Risse ist in der Regel sehr schwierig. Derzeit werden Turbinenschaufeln im Stillstand während einer Revision oder Reparaturarbeiten auf Risse untersucht. Solch eine Untersuchungsmethode ist zeitaufwändig und erfolgt nicht während des Betriebes. Wünschenswert wäre es eine Methode zu haben, mit der es möglich ist, Risse in einer Turbinenschaufel während des Betriebes zu ermitteln
EP 1 505 374 A offenbart ein Verfahren zur Ermittlung von Rissen in den Schaufeln einer Leitschaufelreihe durch Vergleich der ermittelten Schaufeleigenfrequenz mit einer theoretischen Schaufeleigenfrequenz. Eine Fehlermeldung wird generiert, sobald die daraus resultierende Abweichung einen Grenzwert überschreitet..

Die Aufgabe der Erfindung ist es, ein Verfahren anzugeben, mit dem es möglich ist, Risse in einer Turbinenschaufel während des Betriebes zu ermitteln.

Diese Aufgabe wird gelöst durch ein Verfahren zur Ermittlung von Rissen in Turbinenschaufeln, wobei Schaufelschwingungen der Turbinenschaufel während eines Betriebes ermittelt werden, wobei die Schaufeleigenfrequenzen ermittelt werden, wobei theoretische Schaufeleigenfrequenzen berechnet werden und die gemessenen Schaufeleigenfrequenzen mit den theoretischen Schaufeleigenfrequenzen verglichen werden, wobei eine Ermittlung einer Abweichung zwischen der gemessenen Schaufeleigenfrequenz und der theoretischen Schaufeleigenfrequenz erfolgt, wobei ein Generieren einer Fehlermeldung erfolgt, sobald die Abweichung über einem definierten Grenzwert liegt, wobei eine Fehlmeldung generiert wird, wenn ein Frequenzdrift detektiert wird.

Die Erfindung geht somit den neuen Weg, Risse in Turbinenschaufeln während des Betriebes zu ermitteln. Dies erfolgt in erster Linie dadurch, dass zunächst Schaufeleigenfrequenzen gemäß theoretischen Modellen berechnet werden und diese mit gemessenen Schaufeleigenfrequenzen verglichen werden. Diese theoretischen Schaufeleigenfrequenzen hängen u. a. von verschiedenen Betriebsparametern wie Temperatur und Rotationsfrequenz ab. Sobald die gemessenen Schaufeleigenfrequenzen eine Abweichung gegenüber den theoretisch berechneten Schaufeleigenfrequenzen aufweisen, wird eine Fehlermeldung generiert, sobald diese Abweichung über einem definierten Grenzwert liegt.

Vorteilhafte Weiterentwicklungen sind in den Unteransprüchen angegeben. So wird in einer ersten vorteilhaften Weiterbildung die Schaufelschwingung berührungslos gemessen. Dies bietet den Vorteil, dass die Messmethode in erster Näherung keinen Einfluss auf die Schaufelschwingung der Turbinenschaufeln ausübt und darüber hinaus eine hinreichend genaue Frequenzmessung ermöglicht. Mit der berührungslosen Messung werden sowohl die Schaufelschwingungen ermittelt sowie die Rotationsfrequenz des Rotors.

In vorteilhaften Weiterentwicklungen werden die theoretischen Schaufeleigenfrequenzen mittels Finite-Elemente-Berechnungen ermittelt. Mittels der Finite-Berechnungen ist eine vergleichsweise genaue Methode angegeben, die Eigenfrequenzen von Turbinenschaufeln zu ermitteln. In erster Näherung sind die Schaufeleigenfrequenzen für alle auf einem Rotor in einem Kranz angeordneten Turbinenschaufeln identisch. In vorteilhaften Weiterentwicklungen werden die Schaufeleigenfrequenzen individuell pro Turbinenschaufel ermittelt, wobei die Lage dieser Turbinenschaufel im Rotorkranz zwingend ermittelt werden muss.

In einer vorteilhaften Weiterbildung werden die gemessenen Schaufelfrequenzen über Fast-Fourier-Transformation ermittelt. Zunächst werden die Schaufelschwingungen berührungslos gemessen. Diese als Zeitschriebe vorliegenden Datensätze werden anschließend mittels einer Fast-Fourier-Transformation in ein Frequenzsignal transformiert. Die Fast-Fourier-Transformation ist hierbei eine geeignete Methode, das Zeitsignal in ein Frequenzsignal zu ändern, da dies vergleichsweise schnell erfolgt.

In einer vorteilhaften Weiterbildung werden die Schaufeleigenfrequenzen in Abhängigkeit eines Risses und in Abhängigkeit von Drehzahl- und Temperaturabweichungen ermittelt, wodurch eine Vielzahl von Datensätzen entsteht. Mit dem theoretischen Berechnungsmodell wird zunächst ein Riss in der Turbinenschaufel angenommen und darauf hin die Eigenfrequenzen in Abhängigkeit der Drehzahl des Rotors und in Abhängigkeit der Temperatur berechnet. Wird nun im realen Betrieb ein Riss in erster Näherung detektiert kann durch veränderte Bedingungen, wie z. B. eine geänderte Drehzahl oder eine geänderte Temperatur der Riss eindeutig identifiziert werden. Darüber hinaus kann die Rissfortpflanzung fortwährend beobachtet werden, da ein größer werdender Riss sich in einem veränderten Frequenzverhalten in Abhängigkeit der Drehzahl- und Temperaturbedingungen niederschlägt. Die somit gewonnenen Datensätze werden abgespeichert und mit den real gemessenen Schaufeleigenfrequenzen verglichen. Sobald Abweichungen entstehen und diese über einem Grenzwert liegen wird dies als Störung in Form eines Risses detektiert. Sobald die Abweichung über einem definierten Grenzwert liegt, wird ein Störsignal ausgesendet.

In einer vorteilhaften Weiterentwicklung werden die gemessenen Schaufelfrequenzen in definierten zeitlichen Abständen beobachtet und aus der zeitlichen Entwicklung der gemessenen Schaufelfrequenzen ein Riss ggf. ermittelt. Hier liegt der Gedanke zugrunde, dass sobald ein Riss ermittelt ist, dieser in zeitlichen Abständen beobachtet wird und ggf. ein Risswachstum ermittelt wird. Dazu werden die gemessenen Eigenfrequenzen mit den theoretisch ermittelten Eigenfrequenzen verglichen, wobei hierbei in dem Modell für die theoretisch berechneten Eigenfrequenzen ein Riss angenommen wird, der zu unterschiedlichen Eigenfrequenzen führt.

Die Erfindung wird anhand eines Ausführungsbeispiels näher erläutert.

Es zeigt:

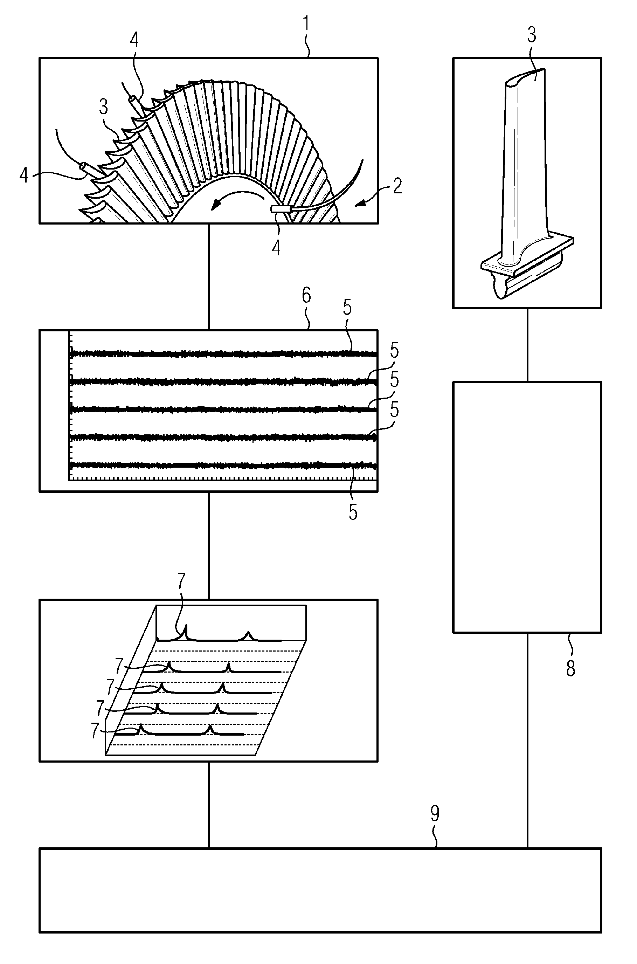

Figur 1 eine schematische Darstellung des Verfahrens.

Im Teilbild 1 ist ein Rotorkranz 2 mit mehreren Turbinenschaufeln 3 zu sehen, wobei lediglich eine Turbinenschaufel mit dem Bezugszeichen 3 aus Gründen der Übersichtlichkeit versehen wurde. Im Betrieb erfahren diese Turbinenschaufeln 3 unerwünschte Schwingungen, die schlimmstenfalls zu einem Riss in der Turbinenschaufel 3 führen könnten. Diese Schwingungen werden mit Hilfe von berührungslosen Sensoren 4 ermittelt. Ein berührungsloser Sensor 4 ist hierbei an der Welle angeordnet. Die Positionen der berührungslosen Sensoren 4 sind fest angeordnet.

Die über die berührungslosen Sensoren 4 ermittelten Zeitsignale 5 werden in einem Zeitschrieb 6 zwischengespeichert. In einem nächsten Verfahrensschritt werden diese Zeitsignale 5 in Frequenzsignale 7 umgewandelt. Dies erfolgt über eine Fourier-Transformation oder ähnliche Spektralanalyse.

Über Finite-Elemente-Berechnung werden die Schaufeleigenfrequenzen einer Turbinenschaufel 3 berechnet. Hierbei werden die Schaufeleigenfrequenzen unter Berücksichtigung von Risseinflüssen und von Störeinflüssen wie Drehzahl- und Temperaturabweichungen berechnet. Die somit gewonnenen Datensätze werden gespeichert und in einem nächsten Verfahrensschritt in einem Modul 9 ausgewertet. Dabei werden die gemessenen Schaufelfrequenzen mit den theoretisch berechneten Schaufelfrequenzen verglichen und, sofern eine Abweichung ermittelt ist, eine Fehlermeldung generiert, sobald die Abweichung über einem definierten Grenzwert liegt.

Bei der Analyse im Modul 9 werden im Wesentlichen die Unterschiede einer aktuellen n-ter Eigenfrequenz zu einer n-ter Eigenfrequenz zum Referenzzeitpunkt für untere k Eigenfrequenzen ermittelt. In einer alternativen Auswertemethode können die Unterschiede der Differenz zwischen einer n-ter Eigenfrequenz und m-ter Eigenfrequenz zu einem aktuellen und zum Referenzzeitpunkt in Betracht gezogen werden. In erster Näherung erfolgt ein Frequenzdrift bei einem Riss, der in einfacher Weise erkannt und analysiert werden kann.

## Patentansprüche

1. Verfahren zur Ermittelung von Rissen in Turbinenschaufeln (3),
wobei Schaufelschwingungen der Turbinenschaufel (3) während eines Betriebes ermittelt werden, mit den Schritten:
- Ermitteln der gemessenen Schaufeleigenfrequenzen
- Berechnung von theoretischen Schaufeleigenfrequenzen,
- Vergleichen der gemessenen Schaufeleigenfrequenzen mit den theoretischen Schaufeleigenfrequenzen,
- Ermittlung einer Abweichung zwischen der gemessenen Schaufeleigenfrequenz und der theoretischen Schaufeleigenfrequenz,
- Generieren einer Fehlermeldung, sobald die Abweichung über einem definierten Grenzwert liegt,
- Generieren einer Fehlermeldung, sobald ein Frequenzdrift detektiert wird,
wobei die Unterschiede zwischen der gemessenen Schaufeleigenfrequenzen in definierten zeitlichen Abständen beobachtet werden und aus der zeitlichen Entwicklung der Unterschiede ein Riss ermittelbar ist.

2. Verfahren nach Anspruch 1,
wobei die Schaufelschwingungen berührungslos gemessen werden.

3. Verfahren nach Anspruch 1 oder 2,
wobei die Berechnung der theoretischen Schaufeleigenfrequenzen mittels Finite-Elemente-Berechnung ermittelt wird.

4. Verfahren nach Anspruch 1, 2 oder 3,
wobei die gemessenen Schaufelfrequenzen über Fourier-Trans formation oder ähnliche Spektralanalyse ermittelt werden.

5. Verfahren nach einem der vorhergehenden Ansprüche,
wobei die Berechnung der Schaufeleigenfrequenzen in Abhängigkeit eines Risses und in Abhängigkeit von Drehzahl- und Temperaturabweichungen erfolgt und dadurch eine Vielzahl von Datensätzen entsteht.

## Claims

1. Method for detecting cracks in turbine blades (3),
wherein vibrations of the turbine blades (3) are determined during operation, comprising the steps:
- determining the measured blade characteristic frequencies,
- calculating theoretical blade characteristic frequencies,
- comparing the measured blade characteristic frequencies with the theoretical blade characteristic frequencies,
- determining a deviation between the measured blade characteristic frequency and the theoretical blade characteristic frequency,
- generating an error message as soon as the deviation lies above a defined limiting value,
- generating an error message as soon as a frequency drift is detected,
wherein the differences between the measured blade characteristic frequencies are observed at defined time intervals and a crack can be detected from the development of the differences over time.

2. Method according to Claim 1,
wherein the blade vibrations are measured without contact.

3. Method according to Claim 1 or 2,
wherein the calculation of the theoretical blade characteristic frequencies is determined by means of finite element calculation.

4. Method according to Claim 1, 2 or 3,
wherein the measured blade frequencies are determined via Fourier transformation or similar spectral analysis.

5. Method according to one of the preceding claims,
wherein the calculation of the blade characteristic frequencies is carried out on the basis of a crack and as a function of rotational speed and temperature fluctuations and, as a result, a multiplicity of data sets is produced.

## Revendications

1. Procédé de détection de fissures dans des aubes ( 3 ) de turbine,
dans lequel on détermine des vibrations des aubes ( 3 ) de la turbine pendant un fonctionnement, comprenant les stades :
- détermination des fréquences propres d'aubes mesurées,
- calcul de fréquences propres d'aubes théoriques,
- comparaison des fréquences propres d'aubes mesurées aux fréquences propres d'aubes théoriques,
- détermination d'un écart entre la fréquence propre d'aubes mesurées et la fréquence propre d'aubes théoriques,
- production d'une annonce d'erreur dès que l'écart dépasse une valeur limite définie,
- production d'une annonce d'erreur dès qu'une dérive de fréquence est détectée,
dans lequel on observe les différences entre les fréquences propres d'aubes mesurées à des intervalles de temps définis et on peut détecter une fissure à partir du développement dans le temps des différences.

2. Procédé suivant la revendication 1,
dans lequel on mesure les vibrations d'aubes sans contact.

3. Procédé suivant la revendication 1 ou 2,
dans lequel on effectue le calcul des fréquences propres d'aubes théoriques au moyen d'un calcul aux éléments finis.

4. Procédé suivant la revendication 1, 2 ou 3,
dans lequel on détermine les fréquences d'aubes mesurées par une transformation de Fourier ou par une analyse spectrale analogue.

5. Procédé suivant l'une des revendications précédentes,
dans lequel on effectue le calcul des fréquences propres d'aubes en fonction d'une fissure et en fonction d'écarts de vitesse de rotation et de température et on crée ainsi une pluralité de jeux de données.
